# EUROPÄISCHE PATENTSCHRIFT

(11) **EP 3 321 579 B1**
(45) Veröffentlichungstag und Bekanntmachung des Hinweises auf die Patenterteilung: **13.01.2021**
(21) Anmeldenummer: 17200513.4
(22) Anmeldetag: 08.11.2017
(51) Int. Cl.: F23C 10/20, F23G 5/30, F23G 7/10, F27B 15/10, B01J 8/44

(54) **WIRBELSCHICHTREAKTOR**
FLUIDISED BED REACTOR
RÉACTEUR À LIT FLUIDISÉ

(30) Priorität: 09.11.2016 AT 510212016
(43) Veröffentlichungstag der Anmeldung: 16.05.2018
(73) Patentinhaber: Beilschmidt, Alfred, 3150 Wilhelmsburg (AT)
(72) Erfinder: Beilschmidt, Alfred, 3150 Wilhelmsburg (AT)
(74) Vertreter: Speringer, Markus

(56) Entgegenhaltungen:
- DE-A1- 2 111 303
- FR-A5- 2 190 025
- GB-A- 1 265 004
- JP-B2- 3 078 493
- US-A- 5 183 641

## Beschreibung

### Technisches Gebiet

Die Erfindung betrifft einen Wirbelschichtreaktor umfassend eine Brennkammer, in welcher eine Wirbelschicht aus einer Schüttung von Feststoffpartikeln, vorzugsweise Quarzsand, gelagert ist, eine unterhalb der Brennkammer befindliche Luftkammer sowie einen Düsenboden zwischen Brennkammer und Luftkammer, welcher eine Vielzahl von Öffnungen aufweist, durch welche Verbrennungsluft von der Luftkammer in die Wirbelschicht leitbar ist. Ein solcher Wirbelschichtreaktor ist aus US 5 183 641 A1 bekannt.

### Stand der Technik

Wirbelschichtreaktoren werden vorwiegend bei industriellen Brennanlagen verwendet, wobei die entsprechenden Brennräume entsprechend groß dimensioniert sind. Um einen Eintritt von Material aus der Wirbelschicht in die unterhalb der Wirbelschicht befindliche Luftkammer zu verhindern, wurden im Stand der Technik unterschiedliche Lösungen für die Luftdüsen im Düsenboden entwickelt. So zeigt beispielsweise die DE 10227473 Luftdüsen für den Düsenboden, welche mit einer glockenförmigen Abdeckung versehen sind, wodurch der Luftstrom umgeleitet wird und ein Eintritt von Material aus der Wirbelschicht in das Düseninnere oder gar in die darunter befindliche Luftkammer vermieden wird. Generell handelt es sich bei den Lösungen für derartige Anlagen zumeist um Ausführungsformen, welche eine siphonartige Luftzuführung durch glockenartige Einrichtungen an den einzelnen Luftdüsen vorsehen.

Derartige Anlagen mit Wirbelschichtreaktoren sind aber auch für die Verwendung in Heizungsanlagen für Wohnhäuser bekannt, wie beispielsweise in der AT 514442 A1 offenbart. Diese Anlagen sind in der Regel weitaus kleiner dimensioniert als industrielle Anlagen und haben zusätzlich häufigere Standzeiten, bei denen kein Luftstrom durch den Düsenboden erfolgt und die Wirbelschicht ruht. Aufgrund der Dimensionierung werden bisher im Düsenboden lediglich einfache Bohrungen verwendet, da die Ausgestaltung einzelner Düsen oder gar Abdeckungen im Größenbereich dieser Anlagen viel zu teuer und damit unwirtschaftlich wäre. Dadurch ergibt sich jedoch das Problem, dass Material aus der Wirbelschicht auch durch die Luftöffnungen im Düsenboden in die darunterliegende Luftkammer gelangen kann und diese daher häufig gereinigt werden muss.

### Kurzbeschreibung der Erfindung

Aufgabe der vorliegenden Erfindung ist es somit, einen Wirbelschichtreaktor mit einem Düsenboden zu schaffen, welcher das oben genannte Problem beseitigt und besonders im Hinblick auf kleine Anlagen für Wohnhäuser einfach und günstig herstellbar ist. Dabei sollen die Öffnungen für die Luftzuführung so ausgestaltet sein, dass ein Durchtreten von Material von der Brennkammer in die Luftkammer vermieden wird.

Diese Aufgabe wird gelöst durch einen Wirbelschichtreaktor mit den Merkmalen des Patentanspruchs 1. Die Herstellung ist dabei kaum aufwändiger als bei dem bisher verwendeten Düsenboden, da die beiden Platten lediglich durch Bohren und Fräsen bearbeitet werden und beim Zusammenfügen die Öffnungen ausbilden. Ein Durchtritt von Material in die Luftkammer wird dadurch vermieden. Auch auf Seiten der Brennkammer ist der Düsenboden weiterhin flach und kann gegebenenfalls einfach gereinigt werden, da keine einzelnen Düsen oder Abdeckungen in die Wirbelschicht ragen.

Gemäß einer möglichen Ausführungsform der Erfindung ist es vorgesehen, dass es sich bei den Vertiefungen um Sacklochausnehmungen handelt. Bei dieser Ausführungsform wird jedem Durchbruch mittels Bohren oder Fräsen ein entsprechendes Sackloch zugeordnet. Fügt man die beiden Platten des Düsenbodens anschließend zusammen, so fluchten jeweils einander gegenüberliegende Sacklöcher abschnittsweise miteinander und mit den Durchbrüchen der jeweils gegenüberliegenden Platte, wodurch die im Schnitt S-förmige Öffnung ausgebildet wird.

Bei einer alternativen Ausführungsform der Erfindung ist es vorgesehen, dass die Durchbrüche rasterförmig angeordnet sind, und dass die Vertiefungen als parallel zueinander verlaufende Längsnuten angeordnet sind, wobei jede Längsnut mehreren benachbarten Durchbrüchen zugeordnet ist. Diese Variante ist noch günstiger in der Herstellung, da statt einzelner zugeordneter Sacklöcher jeweils pro einer Reihe von Durchbrüchen nur eine durchgehende zugeordnete Längsnut vorgesehen werden muss, was den Aufwand für das Fräsen minimiert. Dabei ergibt sich der zusätzliche Vorteil, dass innerhalb des Düsenbodens über die Längsnuten auch ein Luftaustausch stattfinden kann. Sollte tatsächlich mal ein einziger Durchbruch verlegt sein, so kann der zugehörige Durchbruch in der anderen Platte, weiterhin über benachbarte Durchbrüche sowie die zugehörigen Längsnuten mit Luft versorgt werden.

Schließlich ist es ein weiteres Merkmal der vorliegenden Erfindung, dass die Vertiefungen einen im Querschnitt bogenförmigen, vorzugsweise halbkreisförmigen Grund aufweisen. Dies hat den Vorteil, dass sich etwaig in die Öffnungen gelangendes Material nicht in den Ecken der Vertiefungen ablagern kann, sondern aufgrund einer günstigen Luftsstromführung regelmäßig wieder aus den Öffnungen ausgeblasen wird.

### Kurze Beschreibung der Zeichnungsfiguren

Die Erfindung wird nun näher anhand der beiliegenden Figuren beschrieben, wobei
Fig. 1 einen schematischen Schnitt durch einen Düsenboden eines erfindungsgemäßen Wirbelschichtreaktors im Bereich einer Öffnung zeigt und
Fig. 2 einen schematischen Schnitt durch einen Düsenboden einer alternativen Ausführungsform eines erfindungsgemäßen Wirbelschichtreaktors im Bereich einer Öffnung zeigt.

### Beschreibung der Ausführungsarten

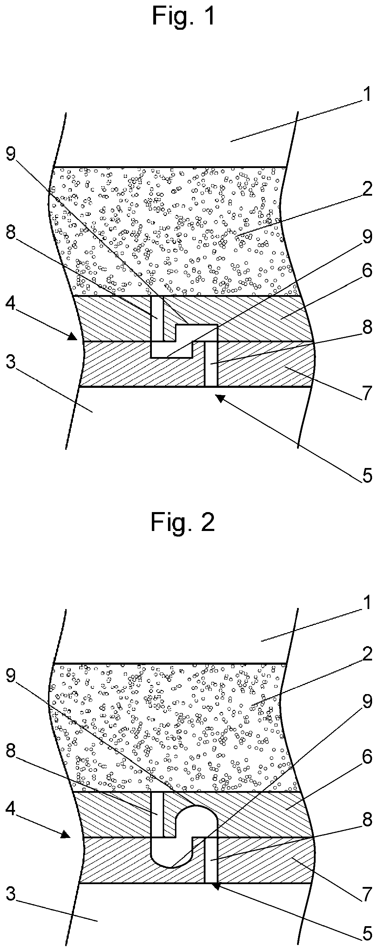

Die in Fig. 1 dargestellte schematische Schnittansicht zeigt einen Detailausschnitt durch einen Wirbelschichtreaktor im Bereich einer Öffnung 5 im Düsenboden 4. Die Dimensionen sind nicht maßstabsgetreu, sondern, zum besseren Verständnis, stark vergrößert dargestellt. Oberhalb des Düsenbodens 4 befindet sich die Brennkammer 1, in welcher eine Wirbelschicht 2 gelagert ist. Die Wirbelschicht 2 besteht aus einer Schüttung von Partikeln, beispielsweise Quarzsand. Unterhalb des Düsenbodens 4 befindet sich eine Luftkammer 3, durch welche die Verbrennungsluft zugeführt wird. Die Verbrennungsluft wird anschließend durch eine Vielzahl von Öffnungen 5 im Düsenboden 4, in die Wirbelschicht 2 eingeblasen, wodurch diese fluidisiert wird.

Der Düsenboden 4 selbst wird durch eine obere Platte 6 und eine untere Platte 7 gebildet, welche jeweils Durchbrüche 8 und diesen zugeordnete Vertiefungen 9 aufweist. Bei einer durchschnittlichen Anlage für ein Wohnhaus haben die Durchbrüche einen Durchmesser von etwa 3 mm, während eine Platte etwa eine Dicke von 5 mm aufweist. Eine spezielle Ausgestaltung von Luftdüsen, wie bei industriellen Anlagen, wäre folglich in dieser Größenordnung weder sinnvoll noch wirtschaftlich.

Die Plattenseiten, welche die Vertiefungen 9 aufweisen sind im montierten Zustand des Düsenbodens 4 einander zugewandt, wobei jede Vertiefung 9 abschnittsweise mit einer gegenüberliegenden Vertiefung 9 sowie mit zumindest einem Durchbruch 8 der jeweils gegenüberliegenden Platte 6,7 fluchtet. Dadurch ergibt sich ein im Schnitt S-förmiger Verlauf der Öffnungen 5, wodurch Material aus der Wirbelschicht 2 nicht durch die Öffnungen 5 in die Luftkammer 3 durchfallen kann. Bei der gezeigten Ausführungsform sind die Durchbrüche 8 durch Bohrungen in der jeweiligen Platte 6,7 gefertigt. Die Vertiefungen 9 werden durch Fräsen von Längsnuten neben einer Reihe von Bohrungen hergestellt.

In der Fig. 2 ist eine alternative Ausführungsform dargestellt, bei welcher ein anderer Fräskopf für die Herstellung der Vertiefungen 9 verwendet wurde, wodurch diese einen bogenförmigen Grund aufweisen, was die Führung des Luftstroms begünstigt und ein Ablagern von Material aus der Wirbelschicht 2 innerhalb der Öffnungen 5, im Speziellen innerhalb der Vertiefungen 9, verhindert.

## Patentansprüche

1. Wirbelschichtreaktor umfassend eine Brennkammer (1), in welcher eine Wirbelschicht (2) aus einer Schüttung von Feststoffpartikeln, vorzugsweise Quarzsand, gelagert ist, eine unterhalb der Brennkammer (1) befindliche Luftkammer (2) sowie einen Düsenboden (4) zwischen Brennkammer (1) und Luftkammer (3), welcher eine Vielzahl von Öffnungen (5) aufweist, durch welche Verbrennungsluft von der Luftkammer (3) in die Wirbelschicht (2) leitbar ist, und wobei der Düsenboden auf der Seite der Brennkammer flach ausgebildet ist, **dadurch gekennzeichnet, dass** der Düsenboden (4) aus zwei übereinander gelagerten Platten (6,7) gefertigt ist, die miteinander flächig verbunden sind, wobei jede Platte (6,7) eine Vielzahl von Durchbrüchen (8) sowie jedem Durchbruch (8) zugeordnete an jeweils einer Plattenseite angeordnete Vertiefungen (9) aufweist, und wobei die Vertiefungen (9) tragenden Plattenseiten im montierten Zustand einander zugewandt sind, wobei ferner jeweils eine Vertiefung (9) einer Platte (6,7) abschnittsweise mit einem Durchbruch (8) und einem Abschnitt der diesem Durchbruch (8) zugeordneten Vertiefung (9) der anderen Platte (7,6) fluchtet, sodass jeweils eine siphonartige, im Schnitt S-förmige Öffnung (5) für die Verbrennungsluft ausgebildet ist.

2. Wirbelschichtreaktor nach Anspruch 1, **dadurch gekennzeichnet, dass** es sich bei den Vertiefungen (9) um Sacklochausnehmungen handelt.

3. Wirbelschichtreaktor nach Anspruch 1, **dadurch gekennzeichnet, dass** die Durchbrüche (8) rasterförmig angeordnet sind, und dass die Vertiefungen (9) als parallel zueinander verlaufende Längsnuten angeordnet sind, wobei jede Längsnut mehreren benachbarten Durchbrüchen (8) zugeordnet ist.

4. Wirbelschichtreaktor nach einem der Ansprüche 1 bis 3, **dadurch gekennzeichnet, dass** die Vertiefungen (9) einen im Querschnitt bogenförmigen, vorzugsweise halbkreisförmigen Grund aufweisen.

## Claims

1. A fluidized bed reactor comprising a combustion chamber (1) in which a fluidized bed (2) made of a packing of solid particles, preferably silica sand, is stored, an air chamber (2) located below the combustion chamber (1) as well as a nozzle base (4) between combustion chamber (1) and air chamber (3) which includes a plurality of openings (5) through which combustion air can be guided from the air chamber (3) into the fluidized bed (2), and wherein the nozzle base is formed in a flat manner on the side of the combustion chamber, **characterized in that** the nozzle base (4) is made of two plates (6 , 7) supported on top of one another which are connected face to face to each other, wherein each plate (6, 7) includes a plurality of through holes (8) as well as depressions (9) associated with each through hole (8) respectively arranged on one side of the plate, and wherein the sides of the plates bearing the depressions (9) face each other in the assembled state, wherein further a respective depression (9) of a plate (6, 7) is sectionally aligned with a through hole (8) and a section of a depression (9) of the other plate (7,6) associated with the through hole (8) such that a respective siphon-like, in cross-section S-shaped opening (5) is formed for the combustion air.

2. The fluidized bed reactor according to claim 1, **characterized in that** the depressions (9) are blind hole recesses.

3. The fluidized bed reactor according to claim 1, **characterized in that** the through holes (8) are arranged in a grid-like manner, and that the depressions (9) are arranged as longitudinal grooves extending in parallel to each other, wherein each longitudinal groove is associated with a plurality of adjacent through holes (8).

4. The fluidized bed reactor according to any of claims 1 to 3, **characterized in that** the depressions (9) have an in cross section arcuate, preferably semicircular ground.

## Revendications

1. Réacteur à lit fluidisé comprenant une chambre de combustion (1) dans laquelle est disposé un lit fluidisé (2) de particules solides en vrac, s'agissant préférentiellement de sable de quartz, une chambre à air (2) située en-dessous de la chambre de combustion (1) ainsi qu'un plateau à buses (4) qui se trouve entre la chambre de combustion (1) et la chambre à air (3) et qui comporte une pluralité d'ouvertures (5) permettant de faire passer de l'air comburant depuis la chambre à air (3) dans le lit fluidisé (2), le plateau à buses ayant en outre une forme plate du côté de la chambre de combustion, **caractérisé en ce que** le plateau à buses (4) est réalisé à partir de deux plaques (6, 7) superposées qui sont reliées en nappe l'une à l'autre, chacune des plaques (6, 7) comportant une pluralité de passages (8) ainsi que des cavités (9) qui sont disposées sur l'une des faces de chacune des plaques tout en étant associées à chacun des passages (8), les faces des plaques pourvues de cavités (9) étant en outre tournées l'une vers l'autre une fois le montage terminé, chacune des cavités (9) sur l'une des plaques (6, 7) étant en outre alignée, sur certaines parties, avec un passage (8) et avec une partie de la cavité (9) sur l'autre plaque (7, 6) associée à ce passage (8), faisant en sorte que l'on obtienne, dans chacune des occurrences, une ouverture (5) pour l'air comburant qui est dotée d'une section en forme de S, rappelant ainsi un siphon.

2. Réacteur à lit fluidisé selon la revendication 1, **caractérisé en ce que** les cavités (9) sont des évidements formant des trous borgnes.

3. Réacteur à lit fluidisé selon la revendication 1, **caractérisé en ce que** les passages (8) sont disposés de manière à former un quadrillage et que les cavités (9) sont disposées sous forme de rainures longitudinales s'étendant parallèlement les unes aux autres, chacune des rainures longitudinales étant associée à plusieurs passages (8) adjacents.

4. Réacteur à lit fluidisé selon l'une des revendications 1 à 3, **caractérisé en ce que** les cavités (9) ont un fond dont la section correspond à une ligne courbée, préférentiellement à un demi-cercle.
